# EUROPEAN PATENT APPLICATION

(11) **EP 4 510 716 A1**
(43) Date of publication of application: **19.02.2025**
(21) Application number: 22937425.1
(22) Date of filing: 13.04.2022
(51) Int. Cl.: H04W 52/18, H04W 72/0457

(54) **TERMINAL, BASE STATION, AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); KUMAGAI, Shinya, Tokyo 100-6150 (JP); TAKAHASHI, Yuki, Tokyo 100-6150 (JP); OKAMURA, Masaya, Tokyo 100-6150 (JP); OKANO, Mayuko, Tokyo 100-6150 (JP); NAGATA, Satoshi, Tokyo 100-6150 (JP)
(74) Representative: Hoffmann Eitle
(86) International application number: PCT/JP2022/017750
(87) International publication number: WO 2023/199446

(57) **Abstract**

A terminal includes: a communication unit that performs uplink or downlink communication in a frequency band aggregated by carrier aggregation; and a control unit that controls transmit power of an uplink control signal on a plurality of component carriers in a case where scheduling is performed in units including the plurality of component carriers in the aggregated frequency band.

## Description

### Technical Field

The present invention relates to a terminal, a base station, and a communication method in a radio communication system.

### Background Art

In New Radio (NR) (also referred to as "5G"), which is a successor system of Long Term Evolution (LTE), a technology that satisfies a high-capacity system, a high-speed data transmission speed, a low latency, simultaneous connection of a large number of terminals, a low cost, power saving, and the like as requirements has been studied (for example, Non-Patent Literature 1).

In addition, in the NR, a carrier aggregation (CA) function that uses a wideband to secure data resources is being studied continuously following the LTE. In the carrier aggregation function, a plurality of component carriers (CC) are aggregated, so that wideband data resources can be secured.

### Citation List

### Non-Patent Literature

Non-Patent Literature 1: 3GPP TS 38.300 V16.7.0 (September, 2021)

### Summary of Invention

### Technical Problem

More flexible and efficient resource allocation may be required in future systems (for example, NR Release 18 and 6G which is a successor system of the NR). However, in the carrier aggregation function according to the related art, there is a problem that a data resource needs to be scheduled for each of a plurality of aggregated component carriers, and overhead of resource allocation is large.

The present invention has been made in view of the above points, and an object of the present invention is to reduce overhead of resource allocation.

### Solution to Problem

According to the disclosed technology, there is provided a terminal including: a communication unit that performs uplink or downlink communication in a frequency band aggregated by carrier aggregation; and a control unit that controls transmit power of an uplink control signal on a plurality of component carriers in a case where scheduling is performed in units including the plurality of component carriers in the aggregated frequency band.

### Advantageous Effects of Invention

According to the disclosed technology, there is provided a technology capable of reducing overhead of resource allocation.

### Brief Description of Drawings

[Fig. 1] Fig. 1 is a diagram for describing a radio communication system according to an embodiment of the present invention.
[Fig. 2] Fig. 2 is a first diagram illustrating an example of a configuration of a virtual component carrier (CC) according to the embodiment of the present invention.
[Fig. 3] Fig. 3 is a second diagram illustrating an example of the configuration of the virtual CC according to the embodiment of the present invention.
[Fig. 4] Fig. 4 is a diagram for describing a power control method according to Example 1-1 of the embodiment of the present invention.
[Fig. 5] Fig. 5 is a diagram for describing a power control method according to Example 2-1 of the embodiment of the present invention.
[Fig. 6] Fig. 6 is a diagram for describing a power control method according to Proposal 2 of Example 2-3 of the embodiment of the present invention.
[Fig. 7] Fig. 7 is a diagram for describing a power control method according to Example 3-1 and Example 3-2 of the embodiment of the present invention.
[Fig. 8] Fig. 8 is a diagram illustrating an example of a functional configuration of a base station according to the embodiment of the present invention.
[Fig. 9] Fig. 9 is a diagram illustrating an example of a functional configuration of a terminal according to the embodiment of the present invention.
[Fig. 10] Fig. 10 is a diagram illustrating an example of a hardware configuration of the base station or the terminal according to the embodiment of the present invention.
[Fig. 11] Fig. 11 is a diagram illustrating an example of a configuration of a vehicle according to the embodiment of the present invention.

### Description of Embodiments

Hereinafter, an embodiment of the present invention will be described with reference to the drawings. Note that the embodiment described below is an example, and the embodiment to which the present invention is applied is not limited to the following embodiment.

In an operation of a radio communication system of the embodiment of the present invention, an existing technology is used as appropriate. The existing technology is, for example, the existing LTE, but is not limited thereto. In addition, the term "LTE" used in the present specification has a broad meaning including LTE-Advanced and successor systems thereof (for example, New Radio (NR)) unless otherwise specified.

In the embodiment of the present invention described below, the terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in the existing LTE are used. This is for convenience of description, and similar signals, functions, and the like may be referred to by other names. In addition, the above-described terms in NR correspond to an NR-SS, an NR-PSS, an NR-SSS, an NR-PBCH, an NR-PRACH, and the like. However, even a signal used in the NR is not necessarily specified with "NR-".

In the embodiment of the present invention, a duplex method may be a time division duplex (TDD), a frequency division duplex (FDD) method, or other methods (for example, flexible duplex).

In addition, in the embodiment of the present invention, the expression "configuring" a radio parameter and the like may mean that a predetermined value is pre-configured, or that a radio parameter notified from a base station 10 or a terminal 20 is configured.

### (System Configuration)

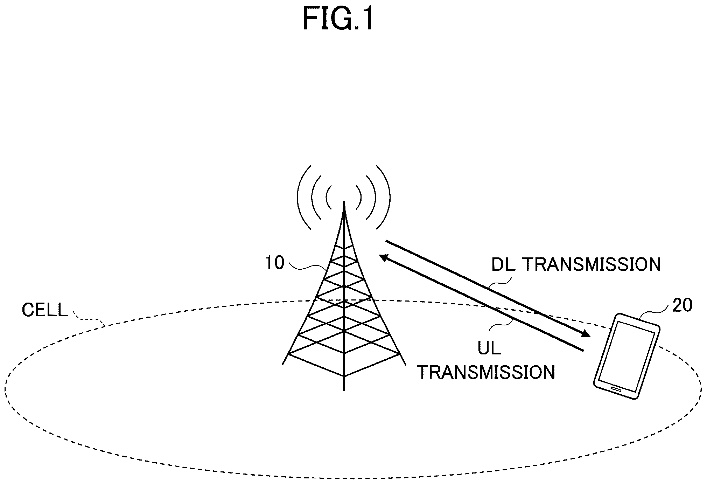

Fig. 1 is a diagram for describing a radio communication system according to the embodiment of the present invention.

As illustrated in Fig. 1, the radio communication system according to the embodiment of the present invention includes the base station 10 and the terminal 20. Although one base station and one terminal are illustrated in Fig. 1, this is only an example, and a plurality of base stations 10 and a plurality of terminals 20 may be provided.

The base station 10 is a communication device that provides one or more cells and performs radio communication with the terminal 20. Physical resources of a radio signal are defined in a time domain and a frequency domain, the time domain may be defined by the number of orthogonal frequency division multiplexing (OFDM) symbols, and the frequency domain may be defined by the number of subcarriers or the number of resource blocks. In addition, a transmission time interval (TTI) in the time domain may be a slot, or the TTI may be a subframe.

The base station 10 transmits a synchronization signal and system information to the terminal 20. The synchronization signal is, for example, an NR-primary synchronization signal (PSS) or an NR-secondary synchronization signal (SSS). The system information is transmitted on, for example, an NR-physical broadcast channel (PBCH) and is also referred to as broadcast information. The synchronization signal and the system information may also be referred to as an SS/PBCH block (SSB). As illustrated in Fig. 1, the base station 10 transmits a control signal or data to the terminal 20 in downlink (DL) and receives a control signal or data from the terminal 20 in uplink (UL). Both the base station 10 and the terminal 20 can transmit and receive a signal by performing beamforming. In addition, both the base station 10 and the terminal 20 can apply communication based on multiple input multiple output (MIMO) to DL or UL. In addition, both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group (SCG) cell (PSCell) of another base station 10 by dual connectivity (DC).

The terminal 20 is a communication device having a radio communication function such as a smartphone, a mobile phone, a tablet, a wearable terminal, or a machine-to-machine (M2M) communication module. As illustrated in Fig. 1, the terminal 20 uses various communication services provided by the radio communication system by receiving a control signal or data from the base station 10 in DL and transmitting a control signal or data to the base station 10 in UL. In addition, the terminal 20 receives various reference signals transmitted from the base station 10 and measures a propagation path quality based on a result of receiving the reference signals. The terminal 20 may be referred to as a user equipment (UE), and the base station 10 may be referred to as a gNB.

In the NR, a carrier aggregation function using a wideband to secure data resources is being studied continuously following the LTE. In the carrier aggregation function, a plurality of component carriers are aggregated, so that wideband data resources can be secured.

### (Problem of Related Art)

In the carrier aggregation function according to the related art, there is a problem that a data resource needs to be scheduled for each of a plurality of aggregated component carriers, and overhead of resource allocation is large.

Therefore, in order to solve the above-described problem of the related art, it is conceivable that the terminal performs resource allocation in a scheduling unit with a granularity different from that of the component carrier.

A framework that performs scheduling or aggregation with the granularity different from that of the component carrier is defined as frequency fragmentation.

In addition, in the carrier aggregation, aggregation with the granularity different from that of the component carrier is defined as non-contiguous carrier aggregation.

In addition, in the carrier aggregation (non-contiguous carrier aggregation), scheduling with the granularity different from that of the component carrier is defined as non-contiguous scheduling.

The granularity different from that of the component carrier described above may be a virtual component carrier (virtual CC) unit, a bandwidth part (BWP) unit, a physical resource block (PRB) unit, or a PRB set unit.

Here, the virtual CC is a carrier set in which all or some of frequency resources included in each component carrier among the plurality of component carriers are aggregated.

For example, it may be assumed that the virtual CC includes a plurality of BWPs.

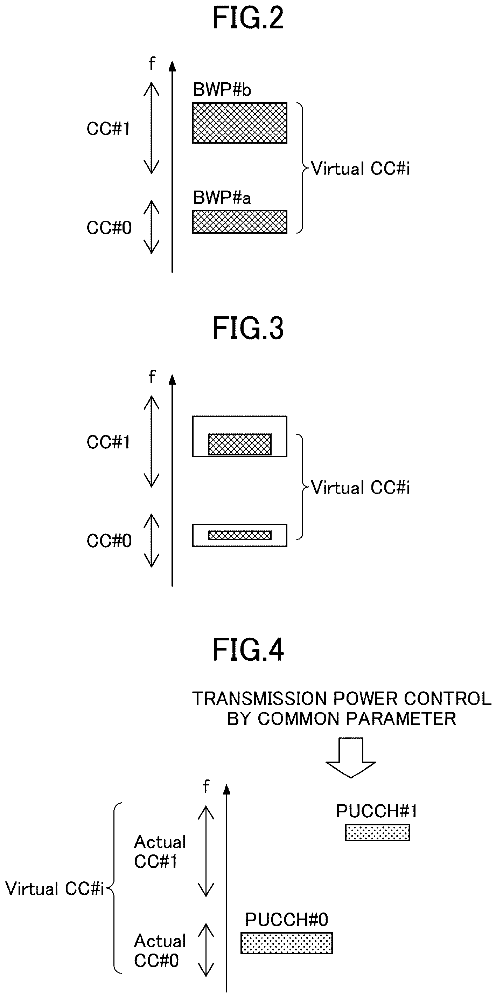

Fig. 2 is a first diagram illustrating an example of a configuration of the virtual CC according to the embodiment of the present invention. A virtual CC #i illustrated in Fig. 2 is a carrier set in which a BWP #a and a BWP #b included in component carriers among a plurality of component carriers (CC #0 and CC #1) are aggregated.

Furthermore, it may be assumed that the virtual CC includes a plurality of PRBs or PRB sets.

Fig. 3 is a second diagram illustrating an example of the configuration of the virtual CC according to the embodiment of the present invention. The virtual CC #i illustrated in Fig. 3 is a carrier set in which a plurality of PRBs included in component carriers among a plurality of component carriers (CC #0 and CC #1) are aggregated. The plurality of PRBs or PRB sets may be included in one or a plurality of BWPs.

Hereinafter, CCs before aggregation are referred to as the actual CC, and CCs after aggregation is referred to as the virtual CC or nominal CC. The names are not limited thereto. In addition, the actual CC only needs to be a unit of a certain frequency resource, and does not have to be defined and configured as the CC. The virtual CC may be defined and configured as the CC.

As described above, when resources of a plurality of component carriers are aggregated and used, it is necessary to define an operation related to transmit power control for PUCCH transmission. In the CC configuration according to the related art, power control is performed in units of cells, but there is a problem that a method of transmit power control in the virtual CC is not clear.

### (Outline of Present Embodiment)

Therefore, in the present embodiment, the method of transmit power control in the virtual CC will be described. Hereinafter, Examples 1 to 5 will be described.

### (Example 1)

In this example, an example in which the terminal 20 performs control related to PUCCH transmit power in units of virtual CCs will be described.

In a case where the virtual CC is configured as a cell (PUCCH-Cell) capable of transmitting the PUCCH, the terminal 20 may perform control related to the PUCCH transmit power in units of virtual CCs.

### (Example 1-1)

The terminal 20 may assume that a parameter related to PUCCH transmit power determination is defined/configured/calculated for each virtual CC.

Fig. 4 is a diagram for describing a power control method according to Example 1-1 of the embodiment of the present invention. In a case where the virtual CC #i includes the actual CC #0 and the actual CC #1, the terminal 20 performs transmit power control on a PUCCH #0 transmitted on the actual CC #0 and a PUCCH #1 transmitted on the actual CC #1 based on a common parameter related to the virtual CC #i.

The parameter may be, for example, as follows. Hereinafter, c corresponding to the primary cell according to the related art may indicate the virtual CC.
- Maximum transmit power P_{CMAX},_{f},_{c}(i)
- Nominal value P_{O_PUCCH},_{b},_{f},_{c}(qᵤ)
- The number of RBs M^{PUCCH}_{RB,b,f,c}(i)
- Downlink path loss PL_{b,f,c}(q_{d})
- Adjustment values Δ_{F_PUCCH}(F) and Δ_{TF,b,f,c}(i) based on PUCCH format, the number of UCI bits, coding rate, etc.

### (Example 1-2)

The terminal 20 may assume that a value indicated by a transmit power control (TPC) command received in the virtual CC is accumulated as a common state.

For example, the terminal 20 may assume that g_{f,b,c}(i,l) is defined/accumulated in units of virtual CCs.

### (Example 1-3)

The terminal 20 may assume that transmit power of the PUCCH transmitted in the virtual CC is determined based on Example 1-1 or Example 1-2 regardless of the actual CC.

According to Example 1, a method of calculating the PUCCH transmit power in the case of the virtual CC configuration is clarified. A terminal configuration can be simplified by collectively managing/calculating a plurality of actual CCs.

### (Example 2)

In this example, an example in which the terminal 20 performs control related to the PUCCH transmit power in units of actual CCs will be described.

In a case where the virtual CC is configured as a cell (PUCCH-Cell) capable of transmitting the PUCCH, the terminal 20 may perform control related to the PUCCH transmit power in units of actual CCs.

### (Example 2-1)

The terminal 20 may assume that the parameter related to PUCCH transmit power determination is defined/set/calculated for each actual CC.

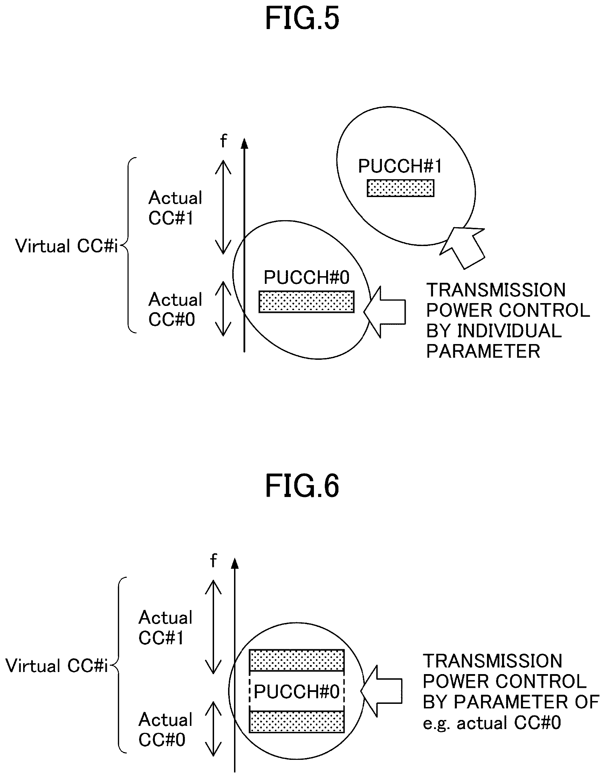

Fig. 5 is a diagram for describing a power control method according to Example 2-1 of the embodiment of the present invention. In a case where the virtual CC #i includes the actual CC #0 and the actual CC #1, the terminal 20 performs transmit power control on the PUCCH #0 transmitted on the actual CC #0 and the PUCCH #1 transmitted on the actual CC #1 based on individual parameters.

The parameter may be, for example, as follows. Hereinafter, c corresponding to the primary cell according to the related art may indicate the actual CC.
- Maximum transmit power P_{CMAX,f,c}(i)
- Nominal value P_{O_PUCCH,b,f,c}(qᵤ)
- The number of RBs M^{PUCCH}_{RB,b,f,c}(i)
- Downlink path loss PL_{b,f,c}(q_{d})
- Adjustment values Δ_{F_PUCCH}(F) and Δ_{TF,b,r,c}(i) based on PUCCH format, the number of UCI bits, coding rate, etc.

### (Example 2-2)

The terminal 20 may assume that a value indicated by the TPC command received in the virtual CC is accumulated as a state for each actual CC.

For example, it is assumed that the terminal 20 accumulates the value indicated by the TPC command received in the virtual CC as the state of each actual CC on which the PUCCH is transmitted. More specifically, in a case where the TPC command is included in DCI of the actual CC #1 and the PUCCH is transmitted on the actual CC #0, the terminal 20 may determine the PUCCH transmit power by applying the value indicated by the TPC command to the value accumulated in the actual CC #0.

According to Example 2-1 or Example 2-2, it is possible to perform appropriate transmit power control in an environment in which transmit power to be used for each actual CC is different.

### (Example 2-3)

The terminal 20 may perform one of operations of the following proposals for PUCCH transmission spanning a plurality of virtual CCs.

### <Proposal 1>

The terminal 20 may calculate the transmit power for each actual CC by using a parameter for each actual CC. That is, in the PUCCH transmission in this case, the transmit power may be different between the actual CCs.

The terminal 20 may assume that notification of the value indicated by the TPC command in the DCI corresponding to the PUCCH is provided for each actual CC, is commonly provided to a plurality of actual CCs, or is provided to a predetermined actual CC. Furthermore, the terminal 20 may apply a value notification of which is provided to all of the plurality of actual CCs or may apply a value notification of which is provided to a predetermined actual CC, for the value indicated by the TPC command in the DCI corresponding to the PUCCH.

The terminal 20 may determine the predetermined actual CC described above based on an index of the CC, a subcarrier spacing (SCS) of the CC, whether or not the CC is a configured CC, and the like.

The terminal 20 may assume that the number of RBs in each actual CC among all the numbers of RBs used for the PUCCH transmission is applied to the number of RBs used for calculating the transmit power in the actual CC.

According to Proposal 1, flexible power control is possible.

### <Proposal 2>

The terminal 20 may determine the transmit power using a parameter related to a predetermined actual CC among the actual CCs for PUCCH transmission. In the PUCCH transmission, the transmit power is common between the actual CCs.

The terminal 20 may determine the predetermined actual CC described above based on an index of the CC, a subcarrier spacing (SCS) of the CC, whether or not the CC is a configured CC, and the like. For example, the terminal 20 may use, as the predetermined actual CC, a CC having a minimum or maximum index, a CC having a minimum or maximum SCS, or a configured CC or instructed CC among candidate CCs. The candidate CCs may be actual CCs on which the PUCCH transmission is performed.

Fig. 6 is a diagram for describing a power control method according to Proposal 2 of Example 2-3 of the embodiment of the present invention. In a case where the virtual CC #i includes the actual CC #0 and the actual CC #1, the terminal 20 performs transmit power control on transmit power of the PUCCH #0 transmitted across the actual CC #0 and the actual CC #1 based on a parameter of the actual CC #0 selected as the predetermined actual CC.

The terminal 20 may assume that the value indicated by the TPC command in the DCI corresponding to the PUCCH is accumulated for each predetermined actual CC.

According to Proposal 2, power control can be simplified.

### (Example 3)

In this example, an example in which the terminal 20 controls the PUCCH transmit power in units of groups to which a plurality of actual CCs belong will be described.

In a case where the virtual CC is configured as a cell (PUCCH-Cell) capable of transmitting the PUCCH, the terminal 20 may perform control related to the PUCCH transmit power in units of groups to which a plurality of actual CCs belong (hereinafter, referred to as an actual CC group).

### (Example 3-1)

The virtual CC in Example 1 may be replaced with the actual CC group. That is, the terminal 20 may perform control related to the PUCCH transmit power in units of actual CC groups. For example, in a case where the actual CC group is configured as a cell (PUCCH-Cell) capable of transmitting the PUCCH, the terminal 20 may perform control related to the PUCCH transmit power based on a parameter common in the actual CC group.

### (Example 3-2)

The actual CC in Example 2 may be replaced with the actual CC group. That is, the terminal 20 may perform control related to the PUCCH transmit power in units of actual CC groups. For example, in a case where the virtual CC is configured as a cell (PUCCH-Cell) capable of transmitting the PUCCH, the terminal 20 may perform control related to the PUCCH transmit power based on individual parameters for each actual CC group.

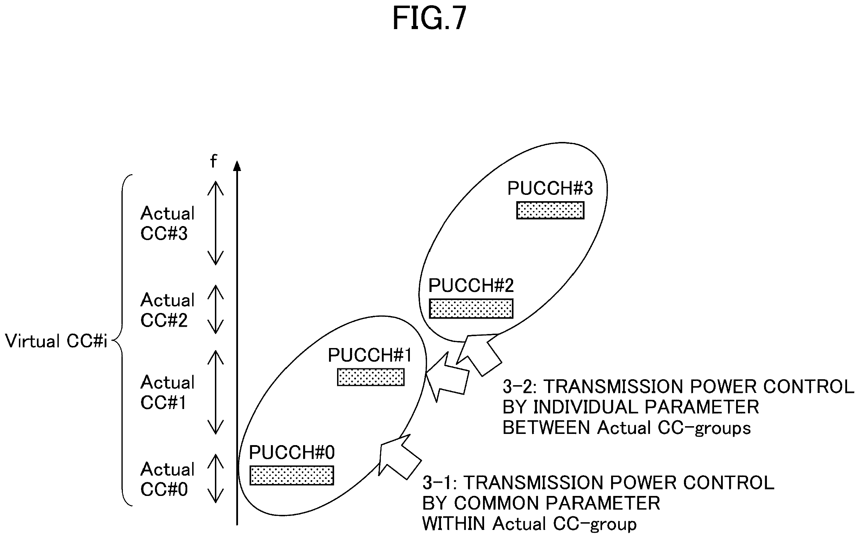

Fig. 7 is a diagram for describing a power control method according to Example 3-1 and Example 3-2 of the embodiment of the present invention.

As an example of the power control method according to Example 3-1, in a case where the virtual CC #i includes the actual CC #0, the actual CC #1, an actual CC #2, and an actual CC #3, the terminal 20 performs transmit power control of the actual CC #0 and the actual CC #1 based on the parameter common in the actual CC group including the actual CC #0 and the actual CC #1.

As an example of the power control method according to Example 3-2, in a case where the virtual CC #i includes the actual CC #0, the actual CC #1, the actual CC #2, and the actual CC #3, the terminal 20 performs transmit power control of each of the actual CCs based on individual parameters between the actual CC group including the actual CC #0 and the actual CC #1 and the actual CC group including the actual CC #2 and the actual CC #3.

### (Example 3-3)

The terminal 20 may notify the base station 10 of terminal capability information related to power control. For example, the terminal 20 may notify the base station 10 of the terminal capability information indicating a supported actual CC group. For example, the terminal capability information indicating the actual CC group may be capability information related to a frequency band, a frequency range, a duplex mode, necessity/unnecessity of a license, and the like.

### (Example 3-4)

The terminal 20 may assume that a method of grouping into the actual CC group is determined in the following manner. For example, the terminal 20 may assume that a method of grouping into the actual CC group is defined in advance in a specification.

Furthermore, the terminal 20 may assume that the method of grouping into the actual CC group is set by the base station 10.

A criterion for the grouping may be a frequency band, a frequency range, a duplex mode, necessity/unnecessity of a license, or the like. For example, the actual CC group may be formed for each frequency band.

According to Example 3, the method of calculating the PUCCH transmit power in the case of the virtual CC configuration is clarified, and appropriate transmit power control can be performed in an environment where the transmit power to be used is different for each actual CC.

### (Example 4)

In this example, an example of selectively using Examples 1 to 3 described above will be described.

### (Example 4-1)

The terminal 20 may notify the base station 10 of terminal capability information indicating whether or not each of the functions described in Example 1 and/or Example 2 and/or Example 3 is supported.

### (Example 4-2)

The terminal 20 may assume that the base station 10 sets a function to be applied among the functions described in Examples 1 to 3.

### (Example 5)

In this example, a modification of each example will be described. For example, the terminal 20 may assume that the functions of Examples 1 to 3 are applied to "a case where some actual CCs included in the virtual CC are configured as cells (PUCCH-Cells) capable of transmitting the PUCCH".

The PUCCH in each of the above-described example is an example of a physical channel for transmitting uplink control information, and may be any other physical channel as long as it is a physical channel for transmitting uplink control information (for example, HARQ-ACK/SR/CSI).

There may be a constraint that the SCS is the same between the actual CCs in the virtual CC in the above-described examples, or a case where the SCS is different may be allowed.

There may be a constraint that the SCS is the same between the actual CCs in the actual CC group in each of the above-described examples, or a case where the SCS is different may be allowed.

There may be a constraint that the SCS is the same between the actual CC groups in the virtual CC in the above-described examples, or a case where the SCS is different may be allowed.

There may be a constraint that the SCS is the same between the virtual CCs in the above-described examples, and a case where the SCS is different may be allowed.

The PUCCH according to each of the above-described examples may be replaced with the PUSCH, or may be the PUSCH that does not include the UCI. That is, the present embodiment may be applied to the PUSCH.

### (Device Configuration)

Next, functional configuration examples of the base station 10 and the terminal 20 that execute the processing and operations described above will be described.

### <Base Station 10>

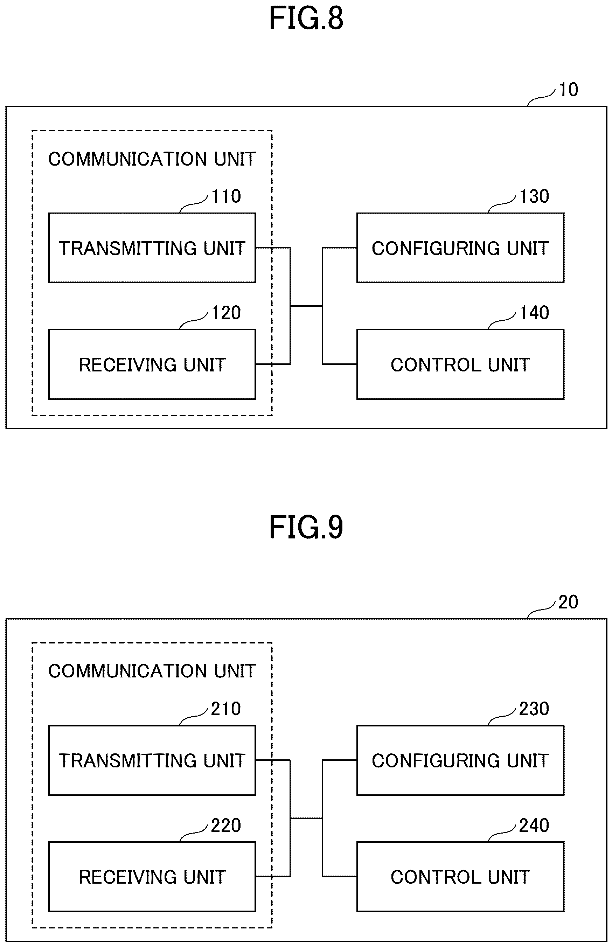

Fig. 8 is a diagram illustrating an example of a functional configuration of the base station 10. As illustrated in Fig. 8, the base station 10 includes a transmitting unit 110, a receiving unit 120, a configuring unit 130, and a control unit 140. The functional configuration illustrated in Fig. 8 is merely an example. As long as the operation according to the embodiment of the present invention can be performed, the names of the functional divisions and functional units may be any names. Furthermore, the transmitting unit 110 and the receiving unit 120 may be collectively referred to as a communication unit.

The transmitting unit 110 has a function of generating a signal to be transmitted to the terminal 20 and wirelessly transmitting the signal. The receiving unit 120 has a function of receiving various signals transmitted from the terminal 20 and acquiring, for example, information of a higher layer from the received signals. In addition, the transmitting unit 110 has a function of transmitting an NR-PSS, an NR-SSS, an NR-PBCH, a DL/UL control signal, DCI by a PDCCH, data by a PDSCH, and the like to the terminal 20.

The configuring unit 130 stores configuration information configured in advance and various types of configuration information to be transmitted to the terminal 20 in a storage device included in the configuring unit 130, and reads the configuration information from the storage device as necessary.

The control unit 140 schedules DL reception or UL transmission of the terminal 20 via the transmitting unit 110. Furthermore, the control unit 140 has a function of performing LBT. The functional unit related to signal transmission in the control unit 140 may be included in the transmitting unit 110, and the functional unit related to signal reception in the control unit 140 may be included in the receiving unit 120. The transmitting unit 110 may be referred to as a transmitter, and the receiving unit 120 may be referred to as a receiver.

### <Terminal 20>

Fig. 9 is a diagram illustrating an example of a functional configuration of the terminal 20. As illustrated in Fig. 9, the terminal 20 includes a transmitting unit 210, a receiving unit 220, a configuring unit 230, and a control unit 240. The functional configuration illustrated in Fig. 9 is merely an example. As long as the operation according to the embodiment of the present invention can be performed, the names of the functional divisions and functional units may be any names. The transmitting unit 210 and the receiving unit 220 may be collectively referred to as a communication unit.

The transmitting unit 210 creates a transmission signal from transmission data and wirelessly transmits the transmission signal. The receiving unit 220 wirelessly receives various signals and acquires a signal of a higher layer from the received signal of a physical layer. In addition, the receiving unit 220 has a function of receiving an NR-PSS, an NR-SSS, an NR-PBCH, a DL/UL/SL control signal, DCI by a PDCCH, data by a PDSCH, and the like transmitted from the base station 10. For example, the transmitting unit 210 may transmit a physical sidelink control channel (PSCCH), a physical sidelink shared channel (PSSCH), a physical sidelink discovery channel (PSDCH), a physical sidelink broadcast channel (PSBCH), or the like to another terminal 20 as D2D communication, and the receiving unit 120 may receive the PSCCH, the PSSCH, the PSDCH, the PSBCH, or the like from another terminal 20.

The configuring unit 230 stores various types of configuration information received from the base station 10 or another terminal by the receiving unit 220 in a storage device included in the configuring unit 230, and reads various types of configuration information from the storage device as necessary. The configuring unit 230 also stores configuration information configured in advance. The control unit 240 controls the terminal 20. In addition, the control unit 240 has a function of performing

### LBT.

The terminal of the present embodiment may be configured as a terminal described in each of the following items. In addition, the following communication method may be implemented.

### <Configuration According to Present Embodiment>

### (Item 1)

A terminal including:
a communication unit that performs uplink or downlink communication in a frequency band aggregated by carrier aggregation; and
a control unit that controls transmit power of an uplink control signal on a plurality of component carriers in a case where scheduling is performed in units including the plurality of component carriers in the aggregated frequency band.

### (Item 2)

The terminal according to Item 1, in which the control unit determines the transmit power of the uplink control signal on the plurality of component carriers based on a parameter notification of which is provided for each of the units including the plurality of component carriers.

### (Item 3)

The terminal according to Item 1 or 2, in which the control unit determines the transmit power of the uplink control signal on the plurality of component carriers based on a parameter notification of which is provided for each component carrier included in the plurality of component carriers.

### (Item 4)

The terminal according to any one of Items 1 to 3, in which the control unit determines the transmit power of the uplink control signal on the plurality of component carriers based on a parameter notification of which is provided for each group to which a component carrier included in the plurality of component carriers belongs.

### (Item 5)

A base station including:
a communication unit that performs communication with a terminal in a frequency band aggregated by carrier aggregation; and
a control unit that assumes that transmit power of an uplink control signal on a plurality of component carriers is controlled in a case where scheduling is performed in units including the plurality of component carriers in the aggregated frequency band.

### (Item 6)

A communication method executed by a terminal, the communication method including:
a step of performing uplink or downlink communication in a frequency band aggregated by carrier aggregation; and
a step of controlling transmit power of an uplink control signal on a plurality of component carriers in a case where scheduling is performed in units including the plurality of component carriers in the aggregated frequency band.

According to any of the above configurations, there is provided a technology capable of reducing overhead of resource allocation. According to Item 1, the transmit power of the uplink control signal on the plurality of component carriers can be controlled in a case where scheduling is performed in units including the plurality of component carriers. According to Item 2, the transmit power of the uplink control signal on the plurality of component carriers can be determined based on a parameter notification of which is provided for each of the units including the plurality of component carriers. According to Item 3, the transmit power of the uplink control signal on the plurality of component carriers can be determined based on a parameter notification of which is provided for each component carrier included in the plurality of component carriers. According to Item 4, the transmit power of the uplink control signal on the plurality of component carriers can be determined based on a parameter notification of which is provided for each group to which a component carrier included in the plurality of component carriers belongs.

### (Hardware Configuration)

The block diagrams (Figs. 8 and 9) used for describing the above embodiment illustrate blocks of functional units. The functional blocks (components) are implemented by an arbitrary combination of at least one of hardware or software. A method for implementing each functional block is not particularly limited. That is, each functional block may be implemented by using one physically or logically combined device, or may be implemented by directly or indirectly (for example, in a wired or wireless manner) connecting two or more physically or logically separated devices and using a plurality of these devices. The functional block may be implemented by combining software with the one device or the plurality of devices.

The functions include, but are not limited to, determining, judging, calculating, processing, deriving, investigating, looking up (searching or inquiring), ascertaining, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. For example, a functional block (component) for transmission is referred to as a transmitting unit or a transmitter. In any case, as described above, an implementation method thereof is not particularly limited.

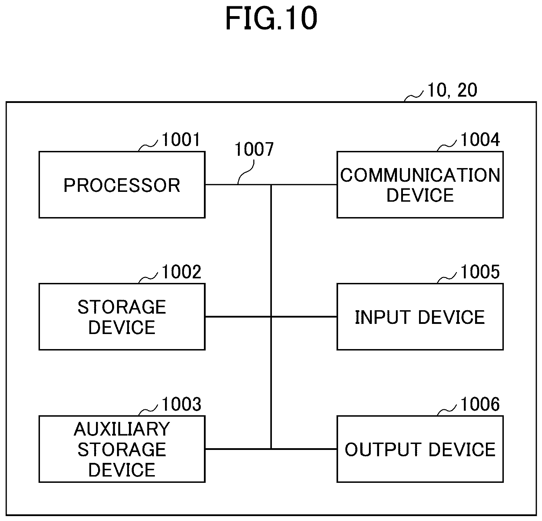

For example, the base station 10, the terminal 20, or the like in an embodiment of the present disclosure may function as a computer that executes processing of a radio communication method of the present disclosure. Fig. 10 is a diagram illustrating an example of a hardware configuration of the base station 10 and the terminal 20 according to an embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be read as a circuit, a unit, or the like. The hardware configuration of the base station 10 and the terminal 20 may include one or more devices illustrated in the drawing, or may be configured without including some devices.

Each function in the base station 10 and the terminal 20 is implemented by the processor 1001 performing an arithmetic operation by loading predetermined software (program) on hardware such as the processor 1001 or the storage device 1002, controlling communication by the communication device 1004, and controlling at least one of reading or writing of data in the storage device 1002 and the auxiliary storage device 1003.

The processor 1001 operates, for example, an operating system to control the entire computer. The processor 1001 may be implemented by a central processing unit (CPU) including an interface for a peripheral device, a control device, an arithmetic device, a register, and the like. For example, the control unit 140, the control unit 240, and the like described above may be implemented by the processor 1001.

In addition, the processor 1001 reads a program (program code), a software module, data, or the like from at least one of the auxiliary storage device 1003 or the communication device 1004 to the storage device 1002, and executes various types of processing according to the program, the software module, the data, or the like. As the program, a program that causes the computer to perform at least a part of the operations described in the above-described embodiment is used. For example, the control unit 140 of the base station 10 illustrated in Fig. 8 may be implemented by a control program stored in the storage device 1002 and operated by the processor 1001. Furthermore, for example, the control unit 240 of the terminal 20 illustrated in Fig. 9 may be implemented by a control program stored in the storage device 1002 and operated by the processor 1001. Although it has been described that the above-described various types of processing are executed by one processor 1001, the various types of processing may be executed simultaneously or sequentially by two or more processors 1001. The processor 1001 may be implemented by one or more chips. The program may be transmitted from a network via an electric communication line.

The storage device 1002 is a computer-readable recording medium, and may be implemented by, for example, at least one of a read only memory (ROM), an erasable programmable ROM (EPROM), an electrically erasable programmable ROM (EEPROM), or a random access memory (RAM). The storage device 1002 may be referred to as a register, a cache, a main memory (main storage device), or the like. The storage device 1002 can store a program (program code), a software module, and the like that can be executed to implement the communication method according to the embodiment of the present disclosure.

The auxiliary storage device 1003 is a computer-readable recording medium, and may be implemented by, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, or a magnetic strip. The above-described storage medium may be, for example, a database, a server, or another appropriate medium including at least one of the storage device 1002 or the auxiliary storage device 1003.

The communication device 1004 is hardware (transmission/reception device) for performing communication between computers via at least one of a wired network or a wireless network, and is also referred to as, for example, a network device, a network controller, a network card, or a communication module. The communication device 1004 may include a high-frequency switch, a duplexer, a filter, a frequency synthesizer, and the like in order to implement, for example, at least one of frequency division duplex (FDD) or time division duplex (TDD). For example, a transmission/reception antenna, an amplifier unit, a transmitting/receiving unit, a transmission/reception path interface, and the like may be implemented by the communication device 1004. The transmitting/receiving unit may be physically or logically separated into the transmitting unit and the receiving unit.

The input device 1005 is an input device (for example, a keyboard, a mouse, a microphone, a switch, a button, or a sensor) that receives an input from the outside. The output device 1006 is an output device (for example, a display, a speaker, or an LED lamp) that performs output to the outside. The input device 1005 and the output device 1006 may be integrated with each other (for example, a touch panel).

In addition, the devices such as the processor 1001 and the storage device 1002 are connected by the bus 1007 for communicating information. The bus 1007 may be implemented using a single bus or may be implemented using different buses for the devices.

Furthermore, the base station 10 and the terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented using at least one of these pieces of hardware.

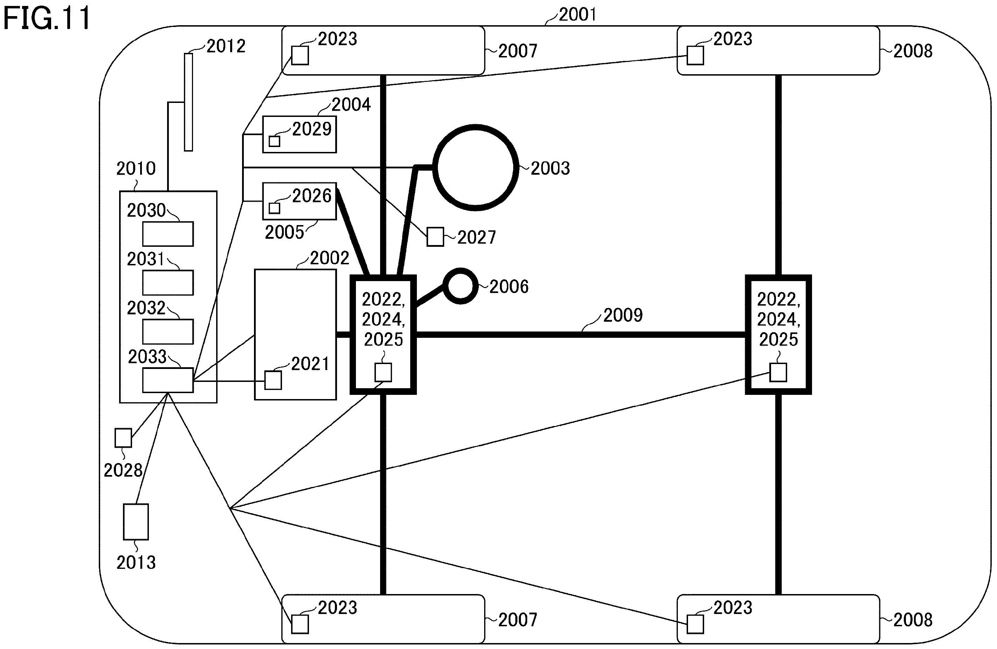

Fig. 11 illustrates a configuration example of a vehicle 2001. As illustrated in Fig. 11, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in the present disclosure may be applied to a communication device mounted on the vehicle 2001, and for example, may be applied to the communication module 2013.

The drive unit 2002 is implemented by, for example, an engine, a motor, or a hybrid of the engine and the motor. The steering unit 2003 includes at least a steering wheel, and is configured to steer at least one of the front wheel or the rear wheel based on an operation of the steering wheel by the user.

The electronic control unit 2010 includes a microprocessor 2031, a memory (ROM or RAM) 2032, and a communication port (IO port) 2033. Signals from the various sensors 2021 to 2029 included in the vehicle 2001 are input to the electronic control unit 2010. The electronic control unit 2010 may be referred to as an electronic control unit (ECU).

Examples of the signals from the various sensors 2021 to 2029 include a current signal from the current sensor 2021 that senses a current of the motor, a rotation speed signal of the front wheel or the rear wheel acquired by the rotation speed sensor 2022, an air pressure signal of the front wheel or the rear wheel acquired by the air pressure sensor 2023, a vehicle speed signal acquired by the vehicle speed sensor 2024, an acceleration signal acquired by the acceleration sensor 2025, a depression amount signal of the accelerator pedal acquired by the accelerator pedal sensor 2029, a depression amount signal of the brake pedal acquired by the brake pedal sensor 2026, an operation signal of the shift lever acquired by the shift lever sensor 2027, and a detection signal for detecting an obstacle, a vehicle, a pedestrian, or the like acquired by the object detection sensor 2028.

The information service unit 2012 includes various devices for providing various types of information such as driving information, traffic information, and entertainment information, such as a car navigation system, an audio system, a speaker, a television, and a radio, and one or more ECUs that control such devices. The information service unit 2012 provides various types of multimedia information and multimedia services to an occupant of the vehicle 2001 by using information acquired from an external device via the communication module 2013 or the like.

A driving assistance system unit 2030 includes various devices for providing functions for preventing an accident in advance and reducing a driver's driving load, such as a millimeter wave radar, a light detection and ranging (LiDAR), a camera, a positioning locator (for example, GNSS), map information (for example, a high definition (HD) map or an autonomous vehicle (AV) map), a gyro system (for example, an inertial measurement unit (IMU) or an inertial navigation system (INS)), an artificial intelligence (AI) chip, and an AI processor, and one or more ECUs for controlling such devices. The driving assistance system unit 2030 transmits and receives various types of information via the communication module 2013 to achieve a driving assistance function or an automated driving function.

The communication module 2013 may communicate with the microprocessor 2031 and the components of the vehicle 2001 via a communication port. For example, the communication module 2013 transmits and receives data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM or RAM) 2032 in the electronic control unit 2010, and the sensors 2021 to 2029 included in the vehicle 2001 via the communication port 2033.

The communication module 2013 is a communication device that can be controlled by the microprocessor 2031 of the electronic control unit 2010 and can communicate with an external device. For example, various types of information are transmitted and received to and from an external device by radio communication. The communication module 2013 may be provided inside or outside the electronic control unit 2010. The external device may be, for example, a base station or a mobile station.

The communication module 2013 transmits a current signal input from the current sensor to the electronic control unit 2010 to an external device by radio communication. In addition, the communication module 2013 transmits, to an external device by radio communication, the rotation speed signal of the front wheel or the rear wheel acquired by the rotation speed sensor 2022, the air pressure signal of the front wheel or the rear wheel acquired by the air pressure sensor 2023, the vehicle speed signal acquired by the vehicle speed sensor 2024, the acceleration signal acquired by the acceleration sensor 2025, the depression amount signal of the accelerator pedal acquired by the accelerator pedal sensor 2029, the depression amount signal of the brake pedal acquired by the brake pedal sensor 2026, the operation signal of the shift lever acquired by the shift lever sensor 2027, the detection signal for detecting an obstacle, a vehicle, a pedestrian, or the like acquired by the object detection sensor 2028, and the like, the signals being input to the electronic control unit 2010.

The communication module 2013 receives various types of information (traffic information, signal information, inter-vehicle information, and the like) transmitted from an external device, and displays the information on the information service unit 2012 included in the vehicle 2001. The communication module 2013 stores various types of information received from an external device in the memory 2032 available by the microprocessor 2031. The microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and the like included in the vehicle 2001 based on the information stored in the memory 2032.

### (Supplement to Embodiment)

Although the embodiment of the present invention has been described above, the disclosed invention is not limited to such an embodiment, and those skilled in the art will understand various changes, modifications, alternatives, substitutions, and the like. Although the description has been given using specific numerical examples to facilitate understanding of the invention, these numerical values are merely examples, and any appropriate value may be used unless otherwise specified. The classification of items in the above description is not essential to the present invention, and matters described in two or more items may be used in combination as necessary, or a matter described in one item may be applied to a matter described in another item (as long as there is no contradiction). A boundary between the functional units or processing units in the functional block diagram does not necessarily correspond to a boundary of physical components. The operation of the plurality of functional units may be physically performed by one component, or the operation of one functional unit may be physically performed by a plurality of components. In the processing procedure described in the embodiment, the order of the processing may be changed as long as there is no contradiction. For convenience of processing description, the base station 10 and the terminal 20 have been described using the functional block diagram, but such a device may be implemented by hardware, software, or a combination thereof. The software operated by the processor included in the base station 10 according to the embodiment of the present invention and the software operated by the processor included in the terminal 20 according to the embodiment of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, or a server.

Furthermore, notification of information is not limited to the aspect/embodiment described in the present disclosure, and may be performed using other methods. For example, the notification of information may be performed by physical layer signaling (for example, downlink control information (DCI) or uplink control information (UCI)), higher layer signaling (for example, radio resource control (RRC) signaling or medium access control (MAC) signaling), broadcast information (master information block (MIB) or system information block (SIB)), other signals, or a combination thereof. Furthermore, the RRC signaling may be referred to as an RRC message, and may be, for example, an RRC connection setup message, an RRC connection reconfiguration message, or the like.

Each aspect/embodiment described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or a decimal), Future Radio Access (FRA), New Radio (NR), New radio access (NX), Future generation radio access (FX), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems, or the next generation system that is extended, modified, created, and defined based on such systems. Further, a plurality of systems may be applied in combination (for example, a combination of at least one of LTE or LTE-A and 5G).

The order of the processing procedure, sequence, flowchart, and the like of each aspect/embodiment described in the present specification may be changed as long as there is no contradiction. For example, for the methods described in the present disclosure, elements of various steps are presented using an exemplary order, and are not limited to the particular order presented.

The specific operation described as being performed by the base station 10 in the present specification may be performed by an upper node thereof in some cases. In a network including one or more network nodes including the base station 10, it is obvious that various operations performed for communication with the terminal 20 may be performed by at least one of the base station 10 or another network node (for example, an MME or S-GW is conceivable, but the network node is not limited thereto) other than the base station 10. Although a case where there is one network node other than the base station 10 has been exemplified above, the other network node may be a combination of a plurality of other network nodes (for example, the MME and the S-GW).

Information, a signal, or the like described in the present disclosure can be output from a higher layer (or lower layer) to a lower layer (or higher layer). Input and output may be performed via a plurality of network nodes.

Input/output information and the like may be stored in a specific location (for example, a memory) or may be managed using a management table. The input/output information and the like can be overwritten, updated, or additionally written. The output information and the like may be deleted. The input information and the like may be transmitted to another device.

The determination in the present disclosure may be made by a value represented by one bit (0 or 1), may be made by a Boolean value (true or false), or may be made by comparison of numerical values (for example, comparison with a predetermined value).

Regardless of being referred to as software, firmware, middleware, a microcode, or a hardware description language, or by other names, software should be interpreted broadly so as to mean an instruction, an instruction set, a code, a code segment, a program code, a program, a subprogram, a software module, an application, a software application, a software package, a routine, a subroutine, an object, an executable file, an execution thread, a procedure, a function, or the like.

The software, instruction, information, and the like may be transmitted and received via a transmission medium. For example, when the software is transmitted from a website, a server, or other remote source by using at least one of a wired technology (a coaxial cable, an optical fiber cable, a twisted pair, a digital subscriber line (DSL), or the like) or a wireless technology (infrared rays, microwaves, or the like), at least one of the wired technology or the wireless technology is included within the definition of the transmission medium.

The information, signal, and the like described in the present disclosure may be represented using any of a variety of different technologies. For example, data, an instruction, a command, information, a signal, a bit, a symbol, a chip, and the like that may be mentioned throughout the above description may be represented by a voltage, a current, electromagnetic waves, a magnetic field or particles, an optical field or photons, or any combination thereof.

The terms described in the present disclosure and the terms necessary for understanding the present disclosure may be replaced with terms having the same or similar meanings. For example, at least one of a channel or a symbol may be a signal (signaling). The signal may also be a message. In addition, a component carrier (CC) may be referred to as a carrier frequency, a cell, a frequency carrier, or the like.

The terms "system" and "network" used in the present disclosure are used interchangeably.

In addition, information, a parameter, and the like described in the present disclosure may be represented using an absolute value, a relative value with respect to a predetermined value, or another corresponding information. For example, a radio resource may be indicated by an index.

The name used for the parameter described above is not limited in any respect. Furthermore, expressions and the like using the parameters may be different from those explicitly disclosed in the present disclosure. Since various channels (for example, the PUCCH and the PDCCH) and information elements can be identified by various suitable names, various names assigned to the various channels and information elements are not limiting in any way.

In the present disclosure, the terms such as "base station (BS)", "radio base station", "base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may also be referred to as a macro cell, a small cell, a femto cell, a pico cell, or the like.

The base station may accommodate one or more (for example, three) cells. In a case where the base station accommodates a plurality of cells, the entire coverage area of the base station may be divided into a plurality of smaller areas, and each smaller area may also provide a communication service by a base station subsystem (for example, a small base station for indoor use (remote radio head (RRH))). The term "cell" or "sector" refers to a part of or the entire coverage area of at least one of the base station or the base station subsystem that provides the communication service in the coverage.

In the present disclosure, the terms such as "mobile station (MS)", "user terminal", "user equipment (UE)", and "terminal" can be used interchangeably.

The mobile station may also be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station or the mobile station may be referred to as a transmission device, a reception device, a communication device, or the like. At least one of the base station or the mobile station may be a device mounted on a mobile object, the mobile object itself, or the like. The mobile object may be a vehicle (for example, a car or an airplane), a moving unmanned mobile object (for example, a drone or an autonomous vehicle), or a robot (manned type or unmanned type). At least one of the base station or the mobile station includes a device that does not necessarily move during the communication operation. For example, at least one of the base station or the mobile station may be an Internet of Things (IoT) device such as a sensor.

In addition, the base station in the present disclosure may be read as a user terminal. For example, each aspect/embodiment of the present disclosure may be applied to a configuration in which communication between a base station and a user terminal is replaced with communication between a plurality of terminals 20 (for example, referred to as device-to-device (D2D) communication or vehicle-to-everything (V2X) communication). In this case, the terminal 20 may have the function of the base station 10 described above. In addition, the terms such as "up" and "down" may be read as terms corresponding to terminal-to-terminal communication (for example, "side"). For example, an uplink channel, a downlink channel, or the like may be read as a side channel.

Similarly, the user terminal in the present disclosure may be read as a base station. In this case, the base station may have the function of the user terminal described above.

The term "determining" used in the present disclosure may encompass a wide variety of operations. For example, judging, calculating, computing, processing, deriving, investigating, and looking up (searching or inquiring) (for example, looking up in a table, a database, or another data structure) can be considered as "determining". Furthermore, receiving (for example, receiving information), transmitting (for example, transmitting information), inputting, outputting, and accessing (for example, accessing data in a memory) can be considered as "determining". In addition, resolving, selecting, choosing, establishing, comparing, and the like can be considered as "determining". That is, any operation can be considered as "determining". Further, "determining" may be read as "assuming", "expecting", "considering", or the like.

The terms "connected", "coupled", or any variation thereof, mean any direct or indirect connection or coupling between two or more elements, and can include a case where one or more intermediate elements are present between two elements that are "connected" or "coupled" to each other. The coupling or connection between elements may be physical coupling or connection, logical coupling or connection, or a combination thereof. For example, "connection" may be read as "access". When used in the present disclosure, two elements can be considered to be "connected" or "coupled" to each other by using at least one of one or more electric wires, one or more cables, or one or more printed electrical connections, and, as some non-limiting and non-exhaustive examples, by using electromagnetic energy having wavelengths in a radio frequency region, a microwave region, and a light (both visible and invisible) region, and the like.

The reference signal may be abbreviated as an RS, or may be referred to as a pilot according to an applied standard.

The phrase "based on" used in the present disclosure does not mean "based only on" unless explicitly stated otherwise. In other words, the phrase "based on" means both "based only on" and "based at least on".

Any reference to elements using designations such as "first", "second", and the like as used in the present disclosure does not generally limit the amount or order of the elements. The designations may be used in the present disclosure as a convenient way to distinguish between two or more elements. Thus, references to first and second elements do not imply that only two elements may be employed or that the first element must in any way precede the second element.

The term "means" in the configuration of each device described above may be read as a "unit", a "circuit", a "device", or the like.

In a case where the present disclosure uses the terms "include", "including", and variations thereof, these terms are intended to be inclusive in a manner similar to the term "comprising". Furthermore, the term "or" used in the present disclosure is intended not to be an exclusive OR.

The radio frame may include one or more frames in the time domain. Each of one or more frames in the time domain may be referred to as a subframe. The subframe may further include one or more slots in the time domain. The subframe may be a fixed time length (for example, 1 ms) independent from the numerology.

The numerology may be a communication parameter applied to at least one of transmission or reception of a signal or channel. The numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing executed by a transceiver in the frequency domain, or specific windowing processing executed by the transceiver in the time domain.

The slot may include one or more symbols (OFDM symbols, single carrier frequency division multiple access (SC-FDMA) symbols, or the like) in the time domain. The slot may be a time unit based on the numerology.

The slot may include a plurality of mini-slots. Each mini-slot may include one or more symbols in the time domain. Further, the mini-slot may be referred to as a sub-slot. The mini-slot may include a smaller number of symbols than the slot. A PDSCH (or PUSCH) transmitted in a time unit larger than the mini-slot may be referred to as a PDSCH (or PUSCH) mapping type A. A PDSCH (or PUSCH) transmitted using the mini-slot may be referred to as a PDSCH (or PUSCH) mapping type B.

The radio frame, the subframe, the slot, the mini-slot, and the symbol all represent time units for signal transmission. Different names corresponding to the radio frame, the subframe, the slot, the mini-slot, and the symbol may be used.

For example, one subframe may be referred to as a transmission time interval (TTI), a plurality of consecutive subframes may be referred to as a TTI, and one slot or one mini-slot may be referred to as a TTI. That is, at least one of the subframe or the TTI may be a subframe (1 ms) in the existing LTE, a period shorter than 1 ms (for example, 1 to 13 symbols), or a period longer than 1 ms. A unit representing the TTI may be referred to as a slot, a mini-slot, or the like instead of a subframe.

Here, the TTI refers to, for example, a minimum time unit of scheduling in radio communication. For example, in the LTE system, the base station performs scheduling of allocating radio resources (a frequency bandwidth, transmit power, and the like that can be used in each terminal 20) to each terminal 20 in units of TTIs. The definition of the TTI is not limited thereto.

The TTI may be a transmission time unit such as a channelcoded data packet (transport block), a code block, or a code word, or may be a processing unit such as scheduling or link adaptation. When a TTI is given, a time interval (for example, the number of symbols) in which a transport block, a code block, a code word, or the like is actually mapped may be shorter than the TTI.

In a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI with a time length of 1 ms may be referred to as a normal TTI (a TTI in LTE Rel. 8 to Rel. 12), normal TTI, a long TTI, a normal subframe, a long subframe, a slot, or the like. A TTI shorter than the normal TTI may be referred to as a shortened TTI, a short TTI, a partial TTI (or fractional TTI), a shortened subframe, a short subframe, a mini-slot, a sub-slot, a slot, or the like.

The long TTI (for example, the normal TTI or the subframe) may be read as a TTI having a time length exceeding 1 ms, and the short TTI (for example, the shortened TTI) may be read as a TTI having a TTI length less than the TTI length of the long TTI and equal to or larger than 1 ms.

The resource block (RB) is a resource allocation unit in the time domain and the frequency domain, and may include one or more contiguous subcarriers in the frequency domain. The number of subcarriers included in the RB may be the same regardless of the numerology, and may be, for example, 12. The number of subcarriers included in the RB may be determined based on the numerology.

In addition, the time domain of the RB may include one or more symbols, and may be a length of one slot, one mini-slot, one subframe, or one TTI. Each of one TTI, one subframe, and the like may include one or more resource blocks.

One or more RBs may be referred to as physical resource blocks (PRBs), sub-carrier groups (SCGs), resource element groups (REGs), PRB pairs, RB pairs, or the like.

Furthermore, the resource block may include one or more resource elements (REs). For example, one RE may be a radio resource area of one subcarrier and one symbol.

The bandwidth part (BWP) (which may also be referred to as a partial bandwidth or the like) may represent a subset of contiguous common resource blocks (RBs) for a certain numerology on a certain carrier. Here, the common RB may be specified by an index of the RB based on a common reference point of the carrier. The PRB may be defined by a certain BWP and numbered within the BWP.

The BWP may include a BWP for UL (UL BWP) and a BWP for DL (DL BWP). One or more BWPs may be configured in one carrier for the terminal 20.

At least one of the configured BWPs may be active, and the terminal 20 does not have to assume that a predetermined signal/channel is transmitted and received outside the active BWP. The terms "cell", "carrier", and the like in the present disclosure may be read as "BWP".

The above-described structures such as the radio frame, the subframe, the slot, the mini-slot, and the symbol are merely examples. For example, the number of subframes included in a radio frame, the number of slots per subframe or radio frame, the number of mini-slots included in a slot, the number of symbols and the number of RBs included in a slot or mini-slot, the number of subcarriers included in an RB, the number of symbols in a TTI, a symbol length, a cyclic prefix (CP) length, and the like can be variously changed.

In the present disclosure, for example, in a case where articles such as a, an, and the in English are added by translation, the present disclosure may include a case where a noun following these articles is a plural form.

In the present disclosure, the expression "A and B are different" may mean that "A and B are different from each other". The expression may mean that "A and B are different from C". The terms such as "separated", "coupled", and the like may also be interpreted in the same manner as "different".

Each aspect/embodiment described in the present disclosure may be used alone, or may be used in combination, or may be used by being switched according to operations. Furthermore, notification of predetermined information (for example, notification of "X") is not limited to explicit notification, and may be implicit notification (for example, the notification of the predetermined information is not performed).

Although the present disclosure has been described in detail above, it is apparent to those skilled in the art that the present disclosure is not limited to the embodiment described in the present disclosure. The present disclosure can be implemented by modifications and variations without departing from the spirit and scope of the present disclosure defined by the claims. Therefore, the description of the present disclosure is for illustrative purposes only and does not limit the present disclosure.

### Reference Signs List

- 10: Base station
- 110: Transmitting unit
- 120: Receiving unit
- 130: Configuring unit
- 140: Control unit
- 20: Terminal
- 210: Transmitting unit
- 220: Receiving unit
- 230: Configuring unit
- 240: Control unit
- 1001: Processor
- 1002: Storage device
- 1003: Auxiliary storage device
- 1004: Communication device
- 1005: Input device
- 1006: Output device
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Rotation speed sensor
- 2023: Air pressure sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving assistance system unit
- 2031: Microprocessor
- 2032: Memory (ROM or RAM)
- 2033: Communication port (IO port)

## Claims

1. A terminal comprising:
a communication unit that performs uplink or downlink communication in a frequency band aggregated by carrier aggregation; and
a control unit that controls transmit power of an uplink control signal on a plurality of component carriers in a case where scheduling is performed in units including the plurality of component carriers in the aggregated frequency band.

2. The terminal according to claim 1, wherein the control unit determines the transmit power of the uplink control signal on the plurality of component carriers based on a parameter notification of which is provided for each of the units including the plurality of component carriers.

3. The terminal according to claim 1, wherein the control unit determines the transmit power of the uplink control signal on the plurality of component carriers based on a parameter notification of which is provided for each component carrier included in the plurality of component carriers.

4. The terminal according to claim 1, wherein the control unit determines the transmit power of the uplink control signal on the plurality of component carriers based on a parameter notification of which is provided for each group to which a component carrier included in the plurality of component carriers belongs.

5. A base station comprising:
a communication unit that performs communication with a terminal in a frequency band aggregated by carrier aggregation; and
a control unit that assumes that transmit power of an uplink control signal on a plurality of component carriers is controlled in a case where scheduling is performed in units including the plurality of component carriers in the aggregated frequency band.

6. A communication method executed by a terminal, the communication method comprising:
a step of performing uplink or downlink communication in a frequency band aggregated by carrier aggregation; and
a step of controlling transmit power of an uplink control signal on a plurality of component carriers in a case where scheduling is performed in units including the plurality of component carriers in the aggregated frequency band.
